# FASCICULE DE BREVET EUROPEEN

(11) **EP 0 811 481 B1**
(45) Date de publication et mention de la délivrance du brevet: **06.08.2003**
(21) Numéro de dépôt: 97401155.3
(22) Date de dépôt: 27.05.1997
(51) Int. Cl.: B32B 17/10, C03C 27/12, B60J 1/00

(54) **Procédé pour la fabrication d'un vitrage feuilleté réfléchissant le rayonnement infrarouge pour automobiles**
Verfahren zur Herstellung einer infrarotes Licht reflektierenden Verbundglasscheibe für Autos
Process for making infra-red light reflecting laminated glass for cars

(30) Priorité: 05.06.1996 DE 19622566
(43) Date de publication de la demande: 10.12.1997
(73) Titulaire: SAINT-GOBAIN VITRAGE, 92400 Courbevoie (FR)
(72) Inventeur: Frost, Thorsten, 52477 Alsdorf (DE); Schilde, Heinz, 52146 Wurselen (DE); Goerenz, Walter, 52477 Alsdorf (DE); Jansen, Manfred, 52511 Geilenkirchen (DE); Linden, Ludwig, 52080 Aachen (DE); von Alphen, Ulrich, Eupen (BE); Crumbach, Richard, 52072 Aachen (DE); Immerschitt, Stefan, 52134 Herzogenrath (DE); Kramling, Franz, 52072 Aachen (DE)
(74) Mandataire: Muller, René

(56) Documents cités:
- EP-A- 0 724 955
- WO-A-85/01725
- US-A- 3 794 809

## Description

La présente invention concerne un procédé pour la fabrication d'un vitrage feuilleté réfléchissant le rayonnement infrarouge et pourvu d'un scellement marginal, en particulier pour automobiles, constitué d'au moins deux feuilles de verre et d'un stratifié, disposé entre ces feuilles de verre et composé d'une pellicule support pourvue d'une couche fonctionnelle en argent et d'au moins une pellicule de colle en polymère thermoplastique unie à la pellicule support revêtue.

Puisque, dans le cas des vitrages feuilletés comportant une mince couche d'argent intérieure, il y a risque de corrosion de la couche d'argent au niveau du bord, différents procédés sont connus pour éviter le risque de corrosion au moyen d'un scellement marginal.

Dans le cas d'un procédé connu d'après le document DE 2344616 A1 pour la fabrication de pare-brise pouvant être chauffés électriquement, la pellicule support revêtue et les deux pellicules de colle en polymère thermoplastique ont la même forme et la même grandeur que les deux feuilles de verre. Avant la juxtaposition des couches individuelles, le revêtement métallique sur la pellicule support est cependant enlevé au niveau du bord sur une largeur de, par exemple, 3 à 12 mm, l'enlèvement de la couche pouvant s'effectuer par voie mécanique ou chimique. Dans cette zone marginale, dans laquelle la couche est enlevée, la pellicule de colle en polymère thermoplastique, qui est en particulier constituée de polyvinylbutyral, s'unit directement à la surface de la pellicule support et assure ainsi le scellement nécessaire. Pour la fabrication du vitrage feuilleté, on utilise dans ce cas les techniques de stratification habituelles. Ce procédé a pour inconvénient que l'enlèvement de la couche dans la zone marginale entraîne des frais de main-d'oeuvre supplémentaires, et que la pellicule support doit, par ailleurs, être manipulée et travaillée avec son revêtement non protégé, à nu, ce qui peut altérer le revêtement sensible.

Dans le cas d'un autre procédé du type mentionné dans le préambule, connu d'après le document EP 0 391 165 A2, on utilise un stratifié composé d'une pellicule support revêtue et de pellicules de polyvinylbutyral disposées sur ses deux faces, de sorte que le revêtement est protégé par la pellicule de colle. Le stratifié correspond en forme et en grandeur aux feuilles de verre. La couche d'argent métallique s'étend, par conséquent, jusqu'à la surface périphérique du vitrage feuilleté. Dans ce cas, également, l'assemblage du stratifié avec les deux feuilles de verre est réalisé à chaud et sous pression selon le procédé habituel. Le scellement a lieu ensuite par application d'un agent d'étanchéité adhésif sur la surface périphérique du vitrage feuilleté achevé. Ce procédé ne convient pas pour la fabrication de vitrages feuilletés, dont les bords sont à nu après montage, comme c'est par exemple le cas pour des vitres de portière pouvant être abaissées. Le scellement sur les bords est, dans ce cas, en effet non seulement visible, mais aussi exposé à des sollicitations mécaniques qui peuvent conduire à la destruction des couches de scellement.

II est connu d'après le document US-PS 3 794 809, pour empêcher la corrosion de la couche d'argent, d'utiliser une pellicule support revêtue de plus petites dimensions que les feuilles de verre, et d'insérer la pellicule support entre deux pellicules thermoplastiques présentant des dimensions correspondant aux dimensions des feuilles de verre et de juxtaposer le tout avec les deux feuilles de verre, de telle sorte que la pellicule support revêtue se termine à une distance d'environ 3 mm du bord des feuilles de verre. L'intervalle au niveau du bord entre les feuilles de verre à l'extérieur de la pellicule revêtue est colmaté lors du traitement thermique sous surpression par le polymère des pellicules de colle thermoplastiques qui se ramollit. Dans le cas de ce procédé, la fabrication d'un stratifié fait d'une pellicule support revêtue et de deux pellicules de colle thermoplastiques entraîne des frais de main-d'oeuvre supplémentaires, parce que la pellicule support revêtue seule doit tout d'abord être découpée à sa forme et sa grandeur, et que les formats de pellicules support individuels doivent être assemblés avec les deux plus grandes pellicules de colle thermoplastiques pour former le stratifié. Il y a également risque, dans ce cas, d'une altération du revêtement non protégé lors de la fabrication du stratifié.

Les procédés habituels pour la fabrication des vitrages feuilletés après la juxtaposition des éléments du paquet de couches comprennent, en règle générale, deux étapes de procédés successives. Dans la première étape, l'air présent entre les couches individuelles est éliminé et, de la sorte, un produit qualifié de préensemble est fabriqué. Pour l'exécution de cette première étape de procédé, le paquet de couches est passé, en règle générale sous une température augmentée valant environ 80 à 100°C entre deux cylindres en caoutchouc ou est soumis à un traitement sous dépression. Le traitement sous dépression peut être réalisé dans un sac en caoutchouc, dans un récipient sous vide ou à l'aide d'un cadre en caoutchouc appliqué sur tout le pourtour du paquet de couches, et présentant une section transversale en U et un canal de purge d'air continu, l'air confiné entre les couches étant aspiré à l'aide d'une pompe à vide. Dans la deuxième étape de procédé, le paquet de couches représentant déjà le préensemble est soumis, dans un autoclave à pression, à une température supérieure à la température de ramollissement du polymère thermoplastique, de même qu'à une pression augmentée valant environ 10 à 15 bars, l'assemblage final étant de ce fait obtenu.

Aux procédés d'assemblage connus appartiennent aussi les procédés dans le cas desquels l'élimination de l'air entre les couches individuelles est réalisée à l'intérieur de l'autoclave servant à l'assemblage final. Un procédé de ce type est, par exemple connu par le document US-PS 3 074 466. Dans le cas de ce procédé connu, des cadres en caoutchouc comportant un canal de purge d'air sont également appliqués sur le pourtour du paquet de couches et le canal d'évacuation d'air est raccordé à une pompe à vide. Dans le cas de ce procédé, l'autoclave peut déjà être placé sous dépression pendant l'aspiration de l'air hors du paquet de couches, ce qui contribue à l'opération de purge d'air du paquet de couches.

L'invention a pour but de développer un procédé du type mentionné dans le préambule qui, d'une part, offre une protection suffisante de la couche d'argent contre la corrosion dans la zone marginale mais qui, d'autre part, ne nécessite aucune mesure particulière pour la préparation du stratifié et soit, par conséquent, particulièrement approprié pour la production industrielle.

Suivant l'invention, ce but est atteint par un procédé qui comprend les étapes de procédé suivantes :
a) un morceau plan, correspondant à la forme plane géométrique des feuilles de verre, mais plus petit de 1 à 5 mm le long du bord à sceller, est découpé dans le stratifié,
b) en respectant la distance marginale choisie, le morceau plan du stratifié est juxtaposé en un paquet de couches avec les deux feuilles de verre, et un préensemble est fabriqué par élimination de l'air confiné entre les couches, et
c) pendant la fabrication de l'ensemble final impliquant un apport de chaleur et de pression, on applique sur les surfaces des feuilles, une pression supérieure à celle qui s'exerce sur le bord du préensemble, de telle sorte que le polymère thermoplastique des pellicules de colle qui se ramollit sous l'influence de la température, s'écoule dans la gorge marginale formée par le morceau de stratifié plus petit et remplisse cette gorge.

La pression inférieure agissant selon l'invention sur le bord du préensemble ne sert pas, dans la phase décisive de l'opération d'assemblage, à une élimination supplémentaire de l'air confiné, mais a pour but, par un effet de dépression supplémentaire, d'aspirer, de manière adéquate, le polymère fondu des couches intermédiaires thermoplastiques dans la gorge marginale, qui a été formée au préalable par le stratifié plus petit et par les feuilles de verre débordant du stratifié.

En soi, on aurait pu s'attendre à ce qu'apparaissent au niveau du bord, en cas d'application d'une dépression supplémentaire sur la zone marginale du paquet de couches et en présence d'une gorge marginale, des déformations cunéiformes gênantes des bords par la compression des feuilles de verre, en particulier lorsque les feuilles de verre sont relativement minces. Par conséquent, il est explicitement proposé dans le document DE 2426940 C2, pour éviter de telles déformations cunéiformes, d'appliquer également sur le bord du paquet de couches une surpression réglée séparément. De façon surprenante, il s'est cependant avéré que, dans le cas de feuilles de verre de seulement 2 à 3 mm d'épaisseur, les déformations redoutées au niveau du bord n'apparaissent pas lorsque la profondeur de la gorge marginale, dans le cas de feuilles de verre minces de ce type, est limitée à environ 3 mm maximum. De bons résultats, tant en ce qui concerne l'effet de scellement, qu'en ce qui concerne la qualité optique dans la zone marginale, sont obtenus dans ce cas, lorsque la profondeur de la gorge marginale est d'environ 2 mm.

En principe, conformément au procédé de l'invention, on chauffe le préensemble à la température de fluidité et d'adhésivité des pellicules de colle et on soumet le préensemble chauffé, à l'aide d'une presse ou d'un dispositif à rouleaux, à une pression mécanique agissant sur les surfaces des feuilles de verre. La zone marginale du préensemble, c'est-à-dire sa surface périphérique, reste, dans ce cas, exempte de pression, ce qui conduit à la pression différentielle nécessaire.

Suivant une forme d'exécution préférée, on exécute cependant le procédé de l'invention, en réalisant la fabrication de l'ensemble final dans un autoclave, la pression agissant sur le bord du préensemble qui est inférieure à la pression régnant dans l'autoclave étant obtenue à l'aide d'un cadre en caoutchouc appliqué de façon étanche autour du bord du préensemble, pourvu d'un canal d'aspiration périphérique et raccordé à une source de dépression. Dans ce cas, on applique dans l'autoclave une surpression de 10 à 15 bars et, sur le bord du préensemble, une dépression de 1 à 100 millibars.

L'élimination de l'air présent entre les couches individuelles du paquet de couches, qui précède l'assemblage final, peut être réalisée en principe de différentes façons, par exemple par précalandrage du paquet de couches à température ambiante et/ou à température plus élevée. De préférence, la purge d'air est cependant également réalisée par aspiration, et ce, à l'intérieur de l'autoclave avec les mêmes moyens que ceux par lesquels le polymère ramolli est aspiré dans la gorge marginale lors de l'assemblage final.

D'autres particularités et avantages du procédé de l'invention ressortiront des revendications dépendantes et de la description suivante d'un exemple d'exécution de l'invention préféré à l'aide des dessins annexés.

Dans les dessins :
- la figure 1 est une vue en coupe de la zone marginale d'un préensemble fabriqué au moyen d'un stratifié à trois couches, avant le début du traitement thermique par pression,
- la figure 2 est une vue d'un préensemble fabriqué au moyen d'un stratifié à deux couches, également en coupe à travers la zone marginale avant le début du traitement thermique par pression, et
- la figure 3 montre la zone marginale du vitrage feuilleté achevé.

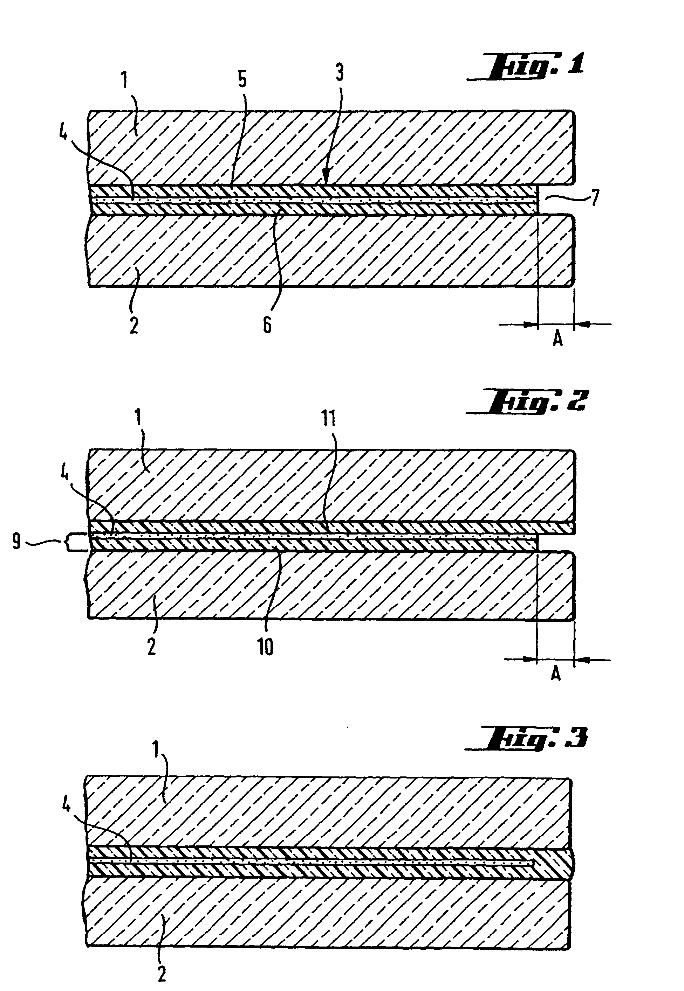

Comme le montre la figure 1, le paquet de couches, à partir duquel le vitrage feuilleté est fabriqué par apport de chaleur et de pression après élimination de l'air confiné entre les couches, comprend les deux feuilles de verre 1 et 2 et le stratifié 3. Dans le cas des feuilles de verre 1, 2, il s'agit, par exemple, à chaque fois de feuilles de verre flotté de 3 mm d'épaisseur, qui sont découpées selon la forme souhaitée et sont bombées ensemble.

Le stratifié 3 comprend une pellicule de PET 4, d'environ 100 mm d'épaisseur, qui est pourvue sur une de ses surfaces d'une couche multiple réfléchissant la chaleur. La couche fonctionnelle proprement dite à l'intérieur de cette couche multiple est constituée d'une ou de plusieurs couches d'argent. La pellicule de PET 4 est unie d'un côté à une pellicule 5 de 0,38 mm d'épaisseur en polyvinylbutyral, et de l'autre côté également à une pellicule 6 de 0,38 mm d'épaisseur en polyvinylbutyral. Des stratifiés de ce type sont fabriqués sous forme de pellicules composites sans fin. Dans une telle pellicule composite, est découpé un morceau plan qui correspond, dans sa forme géométrique, à la forme plane géométrique des feuilles de verre 1 et 2, mais qui est cependant plus petit de la mesure A que les feuilles de verre 1, 2, au niveau des bords où un scellement du vitrage feuilleté est nécessaire. La mesure A doit valoir au moins 1 mm et, dans le cas de feuilles de verre de 3 mm d'épaisseur, au maximum environ 3 mm. De bons résultats sont obtenus lorsque le stratifié 3 est plus petit que les feuilles de verre d'environ 2 mm au niveau de ces bords. De cette façon, une gorge marginale 7 est aménagée entre les feuilles de verre 1, 2 et le bord du stratifié 3.

Lorsque les feuilles de verre 1, 2 et le morceau de stratifié 3 sont juxtaposés de la façon décrite, un cadre en caoutchouc est appliqué tendu sur le bord du paquet de couches ainsi formé, cadre en caoutchouc qui est pourvu sur sa face intérieure d'une gorge dont la largeur correspond à l'épaisseur du paquet de couches. Les ailes latérales délimitant cette gorge ont la forme de lèvres d'étanchéité qui s'appliquent de façon étanche sur les feuilles de verre. Au milieu de la surface de base de cette gorge se trouve un canal, qui est raccordé à un flexible résistant à la pression et communiquant avec une pompe à vide.

Lorsque les vitrages feuilletés sont des pare-brise, ils sont souvent pourvus, le long de la limite supérieure du vitrage, d'une bande filtrante atténuant la lumière, pour protéger le conducteur de l'incidence directe du soleil. Ces bandes filtrantes sont constituées, en règle générale, de zones colorées de la pellicule de colle thermoplastique, ont une forme et une grandeur adaptées aux pare-brise respectifs et sont amenées dans la forme souhaitée par étirage correspondant de la pellicule de colle. En cas d'utilisation de stratifiés à trois couches, on ne peut pas fabriquer des pare-brise comportant des filtres en bande de ce type. Dans ce cas, selon l'invention, un stratifié à deux couches est, par conséquent, utilisé, et la pellicule de colle pourvue de la bande filtrante est juxtaposée en tant que pellicule de colle distincte avec le stratifié à deux couches et les deux feuilles de verre pour former le paquet de couches.

Une telle forme d'exécution est représentée sur la figure 2. Le stratifié à deux couches 9 comprend, dans ce cas, la pellicule support revêtue 4 et une pellicule de colle thermoplastique 10 en polyvinylbutyral, qui est unie à la face revêtue de la pellicule support 4. Le stratifié 9 est à nouveau plus petit de la mesure A que les feuilles de verre 1 et 2, au niveau du bord. Par contre, la pellicule de colle 11 en polyvinylbutyral qui présente la bande filtrante est dimensionnée, dans sa forme et sa grandeur, de préférence de telle sorte qu'elle se termine au ras des côtés des feuilles de verre. Ce paquet de couches est également entouré au niveau du bord, comme décrit ci-dessus, d'un cadre en caoutchouc par l'intermédiaire duquel le bord est mis sous dépression.

Après que le paquet de couches a été préparé de la façon décrite, il est acheminé dans un autoclave à pression dans lequel a lieu le traitement thermique sous pression. Dans ce cas, le flexible en caoutchouc résistant à la pression relié au cadre en caoutchouc est tout d'abord raccordé à une pompe à vide, qui produit au niveau du bord du paquet de couches, une dépression de l'ordre de 2 à 20 millibars. Sous l'effet de cette dépression, l'air présent entre les couches est aspiré et le produit qualifié de préensemble est, de cette façon, fabriqué. Ensuite, la température dans l'autoclave est portée jusqu'à la température d'assemblage d'environ 130°C. La dépression au niveau du bord du préensemble est maintenue aussi longtemps que la température maximale est maintenue.

Lorsque la température d'assemblage est atteinte dans l'autoclave, la surpression dans l'autoclave est portée à environ 12 bars. Le paquet de couches reste sous cette pression et cette température pendant une durée d'environ 60 minutes. Pendant ce temps, la dépression dans le système d'aspiration est simultanément maintenue constante à environ 10 millibars. Dans ces conditions, le polyvinylbutyral thermoplastique du stratifié commence à fluer, est aspiré dans la gorge marginale du préensemble par l'effet de succion de la dépression, fond autour du bord de la pellicule de PET 4 et remplit complètement la gorge marginale. Après environ 120 minutes, la dépression dans le système d'aspiration est coupée et la température est simultanément réduite. La surpression dans l'autoclave est maintenue jusqu'à ce que la température soit descendue à environ 50°C. Après environ 180 minutes, le vitrage feuilleté achevé est enlevé de l'autoclave.

La figure 3 illustre encore une fois la zone marginale du vitrage feuilleté achevé. On peut voir comment la masse polymérique qui a pénétré dans la gorge marginale entre les deux feuilles de verre 1 et 2 entoure le bord de la pellicule support 4 et assure ainsi une bonne obturation étanche.

Des tests comparatifs montrent qu'un scellement efficace est obtenu de cette façon. On effectue, en tant que méthode de test, ce qui est qualifié de test au brouillard salin. Tandis que des phénomènes de corrosion apparaissaient sur des bords non protégés après environ 100 heures, les vitrages feuilletés, fabriqués selon l'invention, ne présentaient pas la moindre corrosion, même après 500 heures dans le brouillard salin.

## Revendications

1. Procédé pour la fabrication d'un vitrage feuilleté réfléchissant le rayonnement infrarouge et pourvu d'un scellement marginal, en particulier pour automobiles, constitué d'au moins deux feuilles de verre et d'un stratifié, disposé entre ces feuilles de verre et composé d'une pellicule support pourvue d'une couche fonctionnelle en argent et d'au moins une pellicule de colle en polymère thermoplastique unie à la face revêtue de la pellicule support, **caractérisé par** les particularités suivantes :
a) un morceau plan, correspondant à la forme plane géométrique des feuilles de verre, mais plus petit de 1 à 5 mm le long du bord à sceller, est découpé dans le stratifié,
b) en respectant la distance marginale choisie, le morceau plan du stratifié est juxtaposé en un paquet de couches avec les deux feuilles de verre, et un préensemble est fabriqué par élimination de l'air confiné entre les couches, et
c) pendant la fabrication de l'ensemble final, impliquant un apport de chaleur et de pression, on applique sur les surfaces des feuilles, une pression supérieure à celle qui s'exerce sur le bord du préensemble, de telle sorte que le polymère thermoplastique des pellicules de colle qui se ramollit sous l'influence de la température, s'écoule dans la gorge marginale formée par le morceau de stratifié plus petit et remplisse cette gorge.

2. Procédé suivant la revendication 1, **caractérisé en ce qu'**on utilise un stratifié composé d'une pellicule support revêtue et de pellicules de colle en polymère thermoplastique unies aux deux faces de la pellicule support revêtue.

3. Procédé suivant la revendication 1, **caractérisé en ce qu'**on utilise un stratifié composé d'une pellicule support revêtue et d'une pellicule de colle en polymère thermoplastique unie à la face revêtue et qu'on intercale, lors de la juxtaposition des éléments du paquet de couches, une pellicule de colle supplémentaire en polymère thermoplastique entre la face non revêtue de la pellicule support et la feuille de verre adjacente.

4. Procédé suivant la revendication 3, **caractérisé en ce qu'**on intercale entre la face non revêtue de la pellicule support et la feuille de verre adjacente une pellicule de colle en polymère thermoplastique dont la grandeur correspond à la grandeur de la feuille de verre.

5. Procédé suivant l'une quelconque des revendications 1 à 4, **caractérisé en ce que**, dans le stratifié, est découpé un morceau plan, qui est plus petit d'environ 2 à 3 mm que la feuille de verre le long du bord à sceller.

6. Procédé suivant l'une quelconque des revendications 1 à 5, **caractérisé en ce que** la fabrication de l'ensemble final est réalisée dans un autoclave, la pression qui s'exerce sur le bord du préensemble et qui est inférieure à la pression régnant dans l'autoclave étant obtenue à l'aide d'un cadre en caoutchouc appliqué de façon étanche autour du bord du préensemble, pourvu d'un canal d'aspiration périphérique et raccordé à une source de dépression.

7. Procédé suivant la revendication 6, **caractérisé en ce qu**'on applique, à la température utilisée pour l'assemblage final, une surpression d'environ 10 à 15 bars dans l'autoclave et, sur le bord du préensemble, une dépression d'environ 1 à 100 millibars.

8. Procédé suivant l'une quelconque des revendications 1 à 7, **caractérisé en ce que** le préensemble est fabriqué par calandrage du paquet de couches.

9. Procédé suivant l'une quelconque des revendications 1 à 7, **caractérisé en ce que** le préensemble est fabriqué par aspiration, via le bord de l'ensemble de couches, de l'air confiné.

## Patentansprüche

1. Verfahren zum Herstellen einer mit einer Randversiegelung versehenen IR-reflektierenden Verbundglasscheibe, insbesondere für Kraftfahrzeuge, aus wenigstens zwei Glasscheiben und einem zwischen diesen Glasscheiben angeordneten Laminat aus einer mit einer Funktionsschicht aus Silber versehenen Trägerfolie und wenigstens einer mit der beschichteten Seite der Trägerfolie verbundenen Klebefolie aus einem thermoplastischen Polymer, **gekennzeichnet durch** folgende Merkmale:
a) aus dem Laminat wird ein der geometrischen Flächenform der Glasscheiben entsprechendes, jedoch entlang des zu versiegelnden Randes um 1 bis 5 mm kleineres Flächenstück geschnitten,
b) unter Einhaltung des gewählten Randabstandes wird das Flächenstück des Laminats mit den beiden Glasscheiben zu einem Schichtenpaket zusammengelegt, und **durch** Entfernung der zwischen den Schichten eingeschlossenen Luft ein Vorverbund hergestellt, und
c) während der Herstellung des endgültigen Verbundes unter Anwendung von Wärme und Druck wird auf die Scheibenflächen ein derart höherer Druck zur Einwirkung gebracht als auf den Rand des Vorverbundes, dass das unter dem Einfluss der Temperatur aufschmelzende thermoplastische Polymer der Klebefolien in die **durch** das kleinere Laminatstück gebildete Randnut fließt und diese ausfüllt.

2. Verfahren nach Anspruch 1, **dadurch gekennzeichnet, dass** ein Laminat aus einer beschichteten Trägerfolie und beiderseits mit der beschichteten Trägerfolie verbundenen Klebefolien aus thermoplastischem Polymer verwendet wird.

3. Verfahren nach Anspruch 1, **dadurch gekennzeichnet, dass** ein Laminat aus einer beschichteten Trägerfolie und einer mit der beschichteten Seite verbundenen Klebefolie aus thermoplastischem Polymer verwendet und beim Zusammenlegen des Schichtenpakets zwischen der unbeschichteten Seite der Trägerfolie und der benachbarten Glasscheibe eine weitere Klebefolie aus thermoplastischem Polymer zwischengeschaltet wird.

4. Verfahren nach Anspruch 3, **dadurch gekennzeichnet, dass** zwischen der unbeschichteten Seite der Trägerfolie und der benachbarten Glasscheibe eine Klebefolie aus thermoplastischem Polymer zwischengeschaltet wird, deren Größe der Größe der Glasscheibe entspricht.

5. Verfahren nach einem der Ansprüche 1 bis 4, **dadurch gekennzeichnet, dass** aus dem Laminat ein Flächenstück geschnitten wird, das entlang des zu versiegelnden Randes etwa 2 bis 3 mm kleiner ist als die Glasscheiben.

6. Verfahren nach einem der Ansprüche 1 bis 5, **dadurch gekennzeichnet, dass** die Herstellung des endgültigen Verbundes in einem Autoklaven erfolgt, wobei der im Vergleich zum Druck im Autoklaven auf den Rand des Vorverbundes einwirkende niedrigere Druck mit Hilfe eines dicht um den Rand des Vorverbundes gelegten, mit einem umlaufenden Absaugkanal versehenen und an eine Unterdruckquelle angeschlossenen Gummirahmens erzeugt wird.

7. Verfahren nach Anspruch 6, **dadurch gekennzeichnet, dass** bei der für die endgültige Verklebung angewendeten Temperatur im Autoklaven ein Überdruck von etwa 10 bis 15 bar, und auf den Rand des Vorverbundes ein Unterdruck von 1 bis 100 mbar zur Einwirkung gebracht wird.

8. Verfahren nach einem der Ansprüche 1 bis 7, **dadurch gekennzeichnet, dass** der Vorverbund durch Zusammenwalzen des Schichtenpakets hergestellt wird.

9. Verfahren nach einem der Ansprüche 1 bis 7, **dadurch gekennzeichnet, dass** der Vorverbund durch Absaugen der eingeschlossenen Luft über den Rand des Schichtenverbundes hergestellt wird.

## Claims

1. Method for manufacturing an insulating glazing pane reflecting infrared radiation and provided with a marginal seal, in particular for cars, consisting of at least two sheets of glass and a laminate disposed between these sheets of glass and composed of a support film provided with a functional layer of silver and at least one film of adhesive made from thermoplastic polymer joined to the face covered with the support film, **characterised by** the following particularities:
a) a flat piece, corresponding to the geometric flat shape of the glass sheets, but smaller by 1 to 5 mm along the edge to be sealed, is cut from the laminate,
b) respecting the marginal distance chosen, the flat piece of laminate is juxtaposed as a packet of layers with the two glass sheets, and a preliminary assembly is made by eliminating the air confined between the layers, and
c) during the manufacture of the final assembly, involving an addition of heat and pressure, there is applied, to the surfaces of the sheets, a pressure greater than that which is exerted on the edge of the preliminary assembly, so that the thermoplastic polymer of the films of adhesive, which softens under the influence of temperature, flows into the marginal groove formed by the smaller piece of laminate and fills this groove.

2. Method according to Claim 1, **characterised in that** use is made of a laminate composed of a covered support film and films of adhesive made from thermoplastic polymer joined to the two faces of the covered support film.

3. Method according to Claim 1, **characterised in that** use is made of a laminate composed of a covered support film and a film of adhesive made from thermoplastic polymer joined to the covered face and **in that**, when the elements of the packet of layers are juxtaposed, an additional film of adhesive made from thermoplastic polymer is interposed between the uncovered face of the support film and the adjacent sheet of glass.

4. Method according to Claim 3, **characterised in that** a film of thermoplastic polymer adhesive whose size corresponds to the size of the sheet of glass is interposed between the non-covered face of the support film and the adjacent sheet of glass.

5. Method according to any one of Claims 1 to 4, **characterised in that**, from the laminate, there is cut a flat piece which is smaller by approximately 2 to 3 mm than the sheet of glass along the edge to be sealed.

6. Method according to any one of Claims 1 to 5, **characterised in that** the manufacture of the final assembly is carried out in an autoclave, the pressure which is exerted on the edge of the preliminary assembly and which is less than the pressure prevailing in the autoclave being obtained by means of a rubber frame applied sealingly around the edge of the preliminary assembly, provided with a peripheral suction channel and connected to a negative-pressure source.

7. Method according to Claim 6, **characterised in that** there is applied, at the temperature used for the final assembly, an overpressure of approximately 10 to 15 bar in the autoclave and, on the edge of the preliminary assembly, a negative pressure of approximately 1 to 100 millibar.

8. Method according to any one of Claims 1 to 7, **characterised in that** the preliminary assembly is made by calendering the packet of layers.

9. Method according to any one of Claims 1 to 7, **characterised in that** the preliminary assembly is manufactured by suction, via the edge of the set of layers, of the confined air.
